# FASCICULE DE BREVET EUROPEEN

(11) **EP 2 700 902 B1**
(45) Date de publication et mention de la délivrance du brevet: **06.08.2014**
(21) Numéro de dépôt: 13178873.9
(22) Date de dépôt: 01.08.2013
(51) Int. Cl.: H04N 7/18, G01B 11/14, G01C 3/08, G02B 27/42, G02B 27/46

(54) **Procédé et dispositif d'imagerie télémétrique**
Telemetrisches Bildgebungsverfahren und -vorrichtung
Method and device for telemetric imaging

(30) Priorité: 22.08.2012 FR 1202273
(43) Date de publication de la demande: 26.02.2014
(73) Titulaire: ONERA (Office National d'Etudes et de Recherches Aérospatiales), 92320 Châtillon (FR)
(72) Inventeur: Piponnier, Martin, 75013 Paris (FR); Primot, Jérôme, 92320 CHATILLON (FR); Druart, Guillaume, 91120 PALAISEAU (FR); Guerineau, Nicolas, 92160 ANTONY (FR)
(74) Mandataire: Cabinet Plasseraud

(56) Documents cités:
- EP-A1- 2 309 718
- WO-A2-2010/080030
- FR-A1- 2 203 087
- US-A1- 2008 137 059

## Description

La présente invention concerne un procédé et un dispositif d'imagerie télémétrique.

De nombreuses applications requièrent non seulement de détecter des objets à l'intérieur d'un champ d'observation, mais aussi de déterminer la distance d'éloignement de chaque objet qui est détecté. Parmi ces applications figurent la détection des câbles électriques aériens pour la sécurité de déplacement des hélicoptères, la détection des lampes de balisage d'une piste d'aéroport pour l'aide à l'atterrissage des avions, etc. Mais en dehors des procédés d'imagerie stéréographique, les procédés usuels d'imagerie optique ne permettent pas de déterminer rapidement et précisément la distance d'éloignement des objets qui sont saisis en image.

Or, l'imagerie stéréographique nécessite de saisir au moins deux images du même objet selon des angles de vue qui sont différents. Cette contrainte entraîne alors les difficultés suivantes :
- au moins deux dispositifs de saisie d'images doivent être installés en parallèle, en caractérisant précisément leurs positions relatives de l'un par rapport à l'autre ;
- les images doivent être saisies au même instant lorsque l'objet photographié est mobile ; et
- un logiciel de corrélation d'images est nécessaire pour comparer les positions du même objet dans les images qui sont saisies séparément par les deux dispositifs.

Par ailleurs, des composants optiques plans sont connus, dont les transmittances varient en fonction de deux coordonnées à l'intérieur du plan de chaque composant, et ont des transformées de Fourier bidimensionnelles qui sont constituées de pics situés sur un cercle de rayon déterminé. De tels composants sont dits continûment auto-imageants, et sont décrits notamment dans l'article intitulé «Exact solutions for nondiffracting beams. I. The scalar theory», de J. Durnin, Journal of the Optical Society of America A, Vol. 4, pp. 651-654, 1987, et dans l'article qui définit les réseaux continûment auto-imageants, et qui est intitulé «Generation of achromatic and propagation-invariant spot array by use of continuously self-imaging gratings», de N. Guérineau et al., Optics Letter, Vol. 26, pp. 411-413, 2001.

En outre, la présentation de M. Piponnier et al. qui est intitulé «Etude et développement de tableaux non diffractants pour la conception de systèmes imageurs avancés», Journées scientifiques de l'Ecole Doctorale Ondes & Matières (EDOM), 7-8 mars 2011, propose d'associer un tel composant continûment auto-imageant avec un capteur d'image pour des applications de détection, de reconnaissance ou de localisation précise d'objets simples.

Un but de la présente invention consiste alors à proposer un nouveau procédé d'imagerie télémétrique qui ne présente pas les inconvénients précités des procédés stéréographiques.

En particulier, l'invention a pour but de déterminer les distances d'éloignement respectives de plusieurs objets qui sont contenus dans un champ d'observation, à partir d'une seule image qui est saisie.

Un autre but de l'invention est de déterminer simplement les distances d'éloignement des objets sans nécessiter de capacité de calcul qui soit importante.

Pour cela, l'invention propose un procédé qui comprend les étapes suivantes :
/1/ obtenir un composant optique plan qui possède une transmittance **t** variant en fonction de deux coordonnées dans un plan du composant, et qui possède une transformée de Fourier bidimensionnelle **T** constituée de pics situés sur un cercle de base de rayon ρ∞ ;
/2/ disposer le composant perpendiculairement à un axe optique **Z** qui est orienté vers le champ d'observation ;
/3/ disposer un capteur d'image dans un plan perpendiculaire à l'axe **Z**, à une distance **d_{f}** du composant et d'un côté de celui-ci qui est opposé au champ d'observation ;
/4/ à l'aide du capteur, saisir une image formée par de la lumière qui provient des objets à travers le composant ; et
/5/ calculer une transformée de Fourier de l'image saisie, pour obtenir un spectre **Sₜₒₜ** de fréquences spatiales qui correspondent à des pics de la transformée de Fourier de l'image saisie, ce spectre pour l'image saisie comprenant plusieurs composantes concentriques chacune inscrite dans un cercle respectif.

D'après les propriétés de la transmittance **t** du composant optique qui sont indiquées à l'étape /1/, ce composant est continûment auto-imageant.

Le procédé de l'invention est **caractérisé en ce que**, à l'étape /1/, la transformée de Fourier **T** de la transmittance **t** du composant est constituée d'un nombre fini **N** de pics qui sont répartis sur le cercle de base qui a pour rayon ρ∞. De plus, le procédé comprend les étapes supplémentaires suivantes, qui sont effectuées après l'étape /5/ :
/6/ fournir un spectre de référence **S_{ref},** qui correspond à des pics d'une transformée de Fourier d'une image de référence telle que produite par une source lumineuse ponctuelle située à distance infinie sur l'axe **Z**, à travers le composant sur le capteur, ce spectre de référence **S_{ref}** étant constitué de fréquences spatiales de référence et inscrit dans le cercle de référence de rayon **2**ρ_{∞}, égal au double du rayon du cercle de base ;
/7/ superposer concentriquement dans un repère commun le spectre de fréquences spatiales de l'image saisie **Sₜₒₜ** et le spectre de référence **S_{ref} ;**
/8/ transformer numériquement par une homothétie centrée dans le repère commun, le spectre de référence **S_{ref}** inscrit dans le cercle de référence de rayon **2**ρ_{∞}**,** en un spectre de référence transformé **Sᵢ** qui est inscrit dans un cercle de rayon variable **2**ρᵢ**,** en variant un rapport **Hᵢ** de l'homothétie qui est égal à **2**ρᵢ/**2**ρ_{∞} **;**
/9/ mémoriser le rapport **Hᵢ** de l'homothétie, lorsque tous les pics du spectre de référence transformé **Sᵢ** se superposent avec des pics du spectre de l'image saisie **Sₜₒₜ,** le spectre de référence transformé **Sᵢ** coïncidant alors avec l'une des composantes du spectre de l'image saisie **Sₜₒₜ ;** et
/10/ calculer la distance d'éloignement à laquelle se trouve l'un des objets dans le champ d'observation, selon la formule **dᵢ = d/(Hᵢ-1).**

La séquence des étapes /8/ à /10/ est ensuite recommencée jusqu'à ne plus pouvoir réaliser l'étape /9/ avec une nouvelle valeur du rapport d'homothétie **Hᵢ,** distincte des valeurs mémorisées antérieurement. Chaque distance d'éloignement **dᵢ** qui est obtenue à l'une des exécutions de l'étape /10/ correspond alors à l'un des objets qui sont contenus dans le champ d'observation.

Ainsi, dans le procédé de l'invention, l'étape /4/ de saisie d'image n'est exécutée qu'une seule fois pour déterminer les distances d'éloignement respectives de plusieurs objets. Les distances d'éloignement qui sont ainsi déterminées sont relatives à un même instant, celui auquel l'image est saisie, sans qu'il soit nécessaire de prendre en compte un éventuel déplacement du dispositif d'imagerie. L'invention permet donc de calculer simplement les éloignements de plusieurs objets, tels que ces éloignements existent au même instant.

Grâce à la propriété de linéarité de la transformation de Fourier, la transformée de Fourier de l'image des objets multiples qui est calculée à l'étape /5/ est identique à la somme des transformées de Fourier respectives d'images séparées qui seraient produites chacune par un seul des objets.

Grâce au fait que la transformée de Fourier **T** de la transmittance **t** du composant soit constituée d'un nombre fini **N** de pics qui sont répartis sur le cercle de base, le spectre de fréquences spatiales qui est produit par un seul objet présent dans le champ d'observation est lacunaire. Cette lacunarité permet de séparer les contributions respectives des objets dans le spectre **Sₜₒₜ** de l'image qui est saisie, à l'étape /9/, et ensuite de calculer individuellement la distance d'éloignement de chaque objet à l'étape /10/.

Eventuellement, le procédé peut être complété par un dénombrement des objets qui sont présents dans le champ d'observation, distingués les uns des autres par leurs valeurs de distance d'éloignement. Pour cela, les itérations de la séquence des étapes /8/ à /10/ qui produisent des valeurs différentes pour le rapport d'homothétie **Hᵢ** sont décomptées, et le nombre **n** des objets qui sont contenus dans le champ d'observation est déterminé comme étant égal au nombre de ces itérations.

Dans des mises en oeuvre préférées de l'invention, le composant peut être un réseau périodique continûment auto-imageant. Dans ce cas, les pics de la transformée de Fourier **T** de la transmittance **t** du composant sont situés simultanément sur une grille périodique et sur le cercle de référence de rayon ρ_{∞}. La recherche de coïncidence qui est effectuée à l'étape /9/, entre les fréquences spatiales du spectre de référence **S_{ref}** et une partie au moins du spectre Sₜₒₜ de l'image qui a été saisie, est alors facilitée. Il est alors plus facile de déterminer précisément les distances d'éloignement respectives de plusieurs objets qui peuvent être proches les uns des autres à l'intérieur du champ d'observation.

L'invention propose aussi un dispositif d'imagerie télémétrique qui comprend :
- le composant optique plan, éventuellement du type réseau périodique continûment auto-imageant ;
- le capteur d'image, qui est disposé parallèlement à et à la distance **d_{f}** du composant, d'un côté de celui-ci opposé au champ d'observation, avec l'axe optique **Z** qui est perpendiculaire au composant et au capteur ;
- une unité de mémorisation, qui est adaptée pour mémoriser une image saisie par le capteur, et pour mémoriser le spectre de référence **S_{ref} ;** et
- une unité de calcul, qui est adaptée pour exécuter les étapes /7/ à /10/ d'un procédé tel que décrit précédemment, en répétant la séquence des étapes /8/ à /10/ tant qu'une nouvelle valeur du rapport d'homothétie **Hᵢ** est obtenue à l'étape /9/.

Dans le dispositif de l'invention, le composant est adapté pour que la transformée de Fourier **T** de sa transmittance **t** soit constituée d'un nombre **N** de pics répartis sur le cercle de base de rayon ρ_{∞}, le nombre **N** étant fini ou limité.

Eventuellement, le composant peut être un réseau de phase. Il peut alors être conçu et réalisé plus facilement en utilisant des procédés de fabrication qui sont disponibles et bien maîtrisés.

D'autres particularités et avantages de la présente invention apparaîtront dans la description ci-après d'exemples de mise en oeuvre non limitatifs, en référence aux dessins annexés, dans lesquels :
- la figure 1 représente schématiquement un dispositif d'imagerie télémétrique qui est conforme à l'invention ;
- la figure 2 est un organigramme des propriétés et des étapes qui sont mises en oeuvre lors d'une utilisation du dispositif de la figure 1 ;
- les figures 3a à 3c montrent trois exemples de transmittance pouvant être utilisées alternativement pour le dispositif de la figure 1, et les figures 4a à 4c montrent les transformées de Fourier associées ;
- la figure 5a montre encore un autre exemple de transmittance pouvant être utilisée pour le dispositif de la figure 1, et la figure 5b montre le spectre de référence associé ;
- la figure 6a montre une image saisie par le dispositif de la figure 1 lorsque la transmittance des figures 5a et 5b est utilisée, et la figure 6b montre le spectre total associé ; et
- la figure 7 est un diagramme récapitulatif des étapes qui sont exécutées lors d'une utilisation du dispositif de la figure 1.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

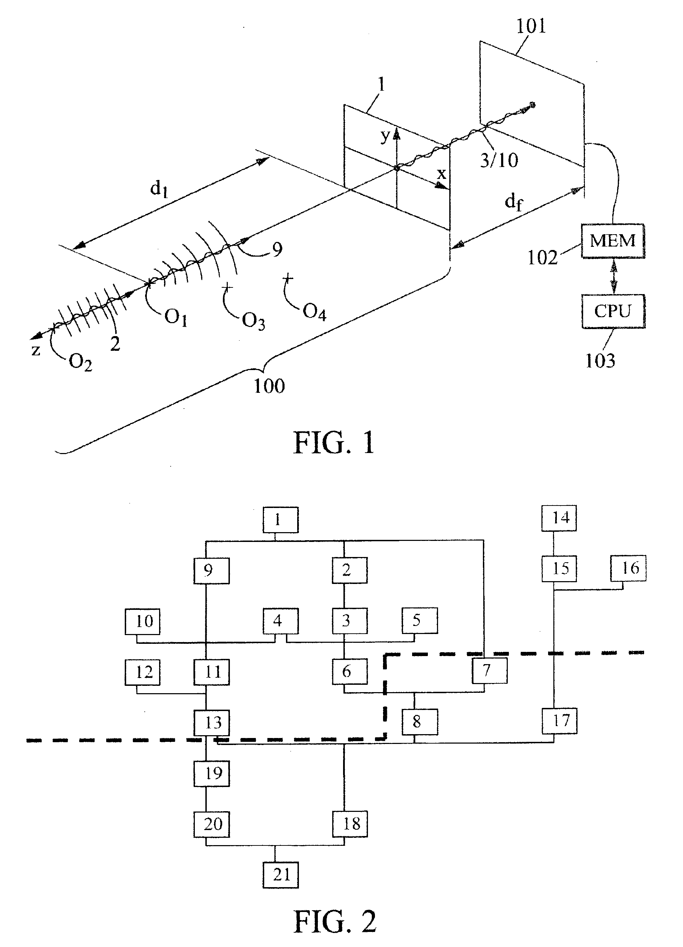

En référence à la figure 1, les références indiquées ont les significations suivantes :
1 composant optique plan,
101 capteur d'image,
102 unité de mémorisation d'une image qui est saisie par le capteur 101, notée MEM,
103 unité de calcul notée CPU, qui est adaptée pour traiter des données d'image mémorisées dans l'unité 102,
**Z** axe optique du dispositif d'imagerie, perpendiculaire au composant 1 et au capteur 2,
**d_{f}** distance entre le composant 1 et le capteur 2 mesurée parallèlement à l'axe **Z**,
100 champ d'observation s'étendant autour de l'axe **Z**,
O₁-O₄ objets contenus dans le champ d'observation 100, émettant ou réfléchissant de la lumière jusqu'au capteur 101 à travers le composant 1,
O₁ objet lumineux situé sur l'axe **Z** dans le champ d'observation 100, à distance finie du composant 1,
O₂ objet lumineux situé sur l'axe **Z** dans le champ d'observation 100, à une distance du composant 1 qui peut être considérée comme étant infinie,
2 onde plane provenant de l'objet O₂ et parvenant au capteur 101 à travers le composant 1,
3 onde résultante produite par le composant 1 à partir de l'onde plane 2,
**d₁** distance entre l'objet O₁ et le composant 1, mesurée parallèlement à l'axe **Z**, et
9 onde sphérique provenant de l'objet O₁ et parvenant au capteur 101 à travers le composant 1.

Le rayonnement électromagnétique qui provient de chacun des objets O₁-O₄ peut être monochromatique ou constitué d'un nombre quelconque de rayonnements à des longueurs d'onde respectives qui sont distinctes. Il peut appartenir à l'un quelconque des domaines de longueur d'onde qui sont utilisés pour observer ou détecter optiquement des objets, notamment infrarouge lointain, infrarouge moyen, proche infrarouge, visible, etc. Le capteur 101 est alors sélectionné en conséquence en fonction de son domaine fréquentiel de sensibilité. En outre, le rayonnement des objets O₁-O₄ peut être cohérent ou incohérent spatialement.

Le composant 1 est translucide à l'intérieur d'une ouverture qui peut être rectangulaire dans un plan perpendiculaire à l'axe **Z**, et repérée par deux axes cartésiens **x** et **y** à l'intérieur de ce plan. Le capteur 101 peut être composé d'une matrice d'éléments photosensibles qui sont alignés parallèlement aux axes **x** et **y.**

A l'intérieur de l'ouverture du composant 1, la transmission du composant, notée **t**, est une fonction des deux coordonnées **x** et **y** : **t(x, y).** On note **T(**σ**ₓ,** σ**_{y})** la transformée de Fourier de la transmittance **t(x, y)** par rapport aux deux coordonnées **x** et **y.** Ainsi, σ**ₓ** est la fréquence spatiale conjuguée avec la coordonnée **x,** et σ**_{y}** est la fréquence spatiale conjuguée avec la coordonnée **y.** Pour l'invention, le composant 1 est sélectionné de sorte que la fonction **T(**σ**ₓ,** σ**_{y})** soit composée d'un nombre fini **N** de pics qui sont tous situés sur un cercle déterminé dans le plan des fréquences spatiales repéré par les axes de σ**ₓ** et σ**_{y}**. Ce cercle est appelé cercle de base, est centré sur le point d'origine des deux axes de fréquences spatiales σ**ₓ** et σ**_{y}**, et on note ρ_{∞} son rayon.

Dans la pratique, la fonction **T**(σ**ₓ**, σ**_{y}**) est d'abord choisie, puis la fonction de transmittance **t(x, y)** est calculée par transformation de Fourier inverse. Le composant 1 peut ensuite être fabriqué en ajustant localement sa transmittance en chaque point à l'intérieur de son ouverture. Un tel ajustement peut être réalisé en modulant numériquement une quantité d'irradiation qui est focalisée successivement en chaque point d'un maillage de l'ouverture du composant 1, lorsqu'un film de matériau photosensible approprié est placé dans cette ouverture. L'homme du métier comprendra alors que les pics de la fonction **T(**σ**ₓ**, σ**_{y})** ne sont pas infiniment fins, mais possèdent une largeur qui dépend des dimensions de l'ouverture du composant 1.

Du fait que la fonction **T(σₓ**, **σ_{y})** soit composée de pics qui sont situés sur le cercle de base, de rayon ρ_{∞} et de centre σ**ₓ** = σ**_{y}** = **0**, le rayonnement 3 qui résulte de l'onde plane 2 après avoir traversé le composant 1 présente une répartition d'intensité qui est invariante par translation parallèlement à l'axe **Z**. Cette intensité est proportionnelle au carré du module de la transmittance **t(x, y):** |t(x, **y)**|², dans tout plan qui est perpendiculaire à l'axe **Z** entre le composant 1 et le détecteur 101.

Cette répartition d'intensité est celle qui est produite par l'objet lumineux O₂ dans un plan parallèle au composant 1. Elle est notée 4 dans l'organigramme de la figure 2, et est appelée image de référence. Elle est formée notamment sur le capteur 101. La décomposition 5 de cette image de référence par transformation de Fourier, produit une série de **N'** pics qui sont situés respectivement à des couples de valeurs pour les fréquences spatiales σ**ₓ** et σ**_{y}**, **N**' étant un nombre entier non nul. L'ensemble de ces couples de valeurs pour les fréquences spatiales σ**ₓ** et σ**_{y}** constitue alors un motif de référence, qui est appelé spectre de référence et noté **S_{ref}.** Par propriété de la transformation de Fourier, le spectre de référence **S_{ref}** est l'autocorrélation de la transformée de Fourier **T(**σ**ₓ,** σ**_{y})** de la transmittance **t(x, y)** (propriété 6 de la figure 2). Il est inscrit dans un cercle de rayon f_{c}=2ρ_{∞} et de centre σ**ₓ** = σ**_{y}** = **0,** désigné par cercle de référence. Dans la présente description, on appelle cercle dans lequel est inscrit un spectre, ou cercle circonscrit au spectre, le plus petit des cercles qui contient tous les pics de ce spectre, certains pics pouvant être situés sur le cercle lui-même.

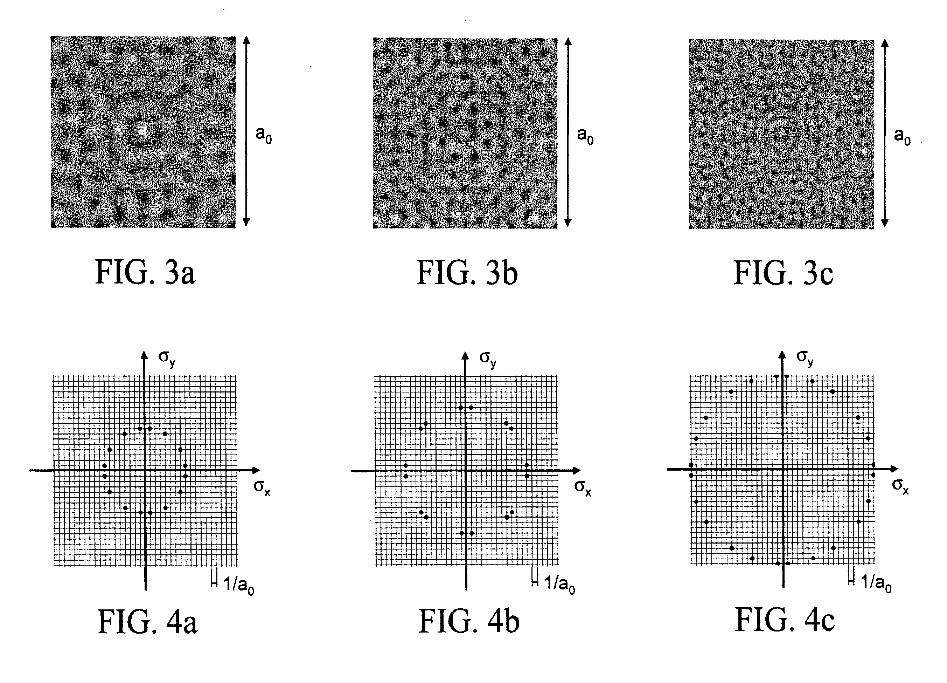

De préférence, le composant 1 peut être en plus un réseau périodique. Sa fonction de transmittance **t(x, y)** est alors constituée d'un motif bidimensionnel élémentaire qui est répété pour remplir l'ouverture du composant 1. Ce motif élémentaire peut être d'une forme quelconque pour permettre un pavage de l'ouverture du composant 1. Dans ce cas de réseau périodique, les pics de la transformée de Fourier **T(**σ**ₓ,** σ**_{y})** sont situés en outre à certains au moins des noeuds d'une grille périodique dans le plan des fréquences spatiales σ**ₓ** et σ**_{y}**. La figure 3a reproduit un premier exemple de motif élémentaire, de forme carrée ayant une longueur de côté ao. Les côtés horizontaux et verticaux du motif élémentaire peuvent être respectivement parallèles aux axes x et y. La figure 4a montre la transformée de Fourier **T(**σ**ₓ**, σ**_{y}**) qui est associée à la transmittance **t(x, y)** de la figure 3a. Les directions horizontale et verticale de la figure 4a sont celles des axes des fréquences spatiales σ**ₓ** et σ**_{y}**. Cette transformée de Fourier est composée de 16 pics associés à des ordres de diffraction distincts, qui sont situés à la fois sur les noeuds d'une grille de pas 1/a₀ du fait de la nature de réseau périodique du composant 1, et sur le cercle de base du fait de la nature continûment auto-imageante du composant 1. Dans cet exemple, le rayon ρ_{∞} du cercle de base est égal à 65^{½}/a₀.

Les figures 3b et 4b correspondent respectivement aux figures 3a et 4a, pour un autre motif élémentaire carré de la transmittance **t(x, y).** La transformée de Fourier **T(**σ**ₓ,** σ**_{y})** est encore composée de 16 ordres de diffraction donc les pics sont situés à certains des noeuds de la grille de pas 1/a₀. Mais ces pics de diffraction sont situés maintenant sur un cercle de base qui a pour rayon ρ_{∞} = 145^{½}/a₀, avec une répartition angulaire dans le plan des fréquences spatiales σ**ₓ** et σ**_{y}** qui est différente de celle de la figure 4a.

Les figures 3c et 4c correspondent aussi respectivement aux figures 3a et 4a, pour encore autre un motif élémentaire carré de la transmittance **t(x, y).** La transformée de Fourier **T(**σ**ₓ,** σ**_{y})** est alors composée de 24 pics de diffraction qui sont encore situés à certains des noeuds de la grille de pas 1/a₀, mais en appartenant simultanément au cercle de base ayant pour rayon ρ_{∞} = 325^{½}/a₀.

Il est rappelé que bien que la transformée de Fourier **T(**σ**ₓ,** σ**_{y})** soit composée d'un nombre fini d'ordres de diffraction qui sont séparés angulairement dans le cas d'un réseau périodique qui constitue le composant 1, ces ordres se combinent spatialement de sorte que la répartition d'intensité lumineuse entre le composant 1 et le capteur 101 demeure invariante par translation parallèlement à l'axe **Z**.

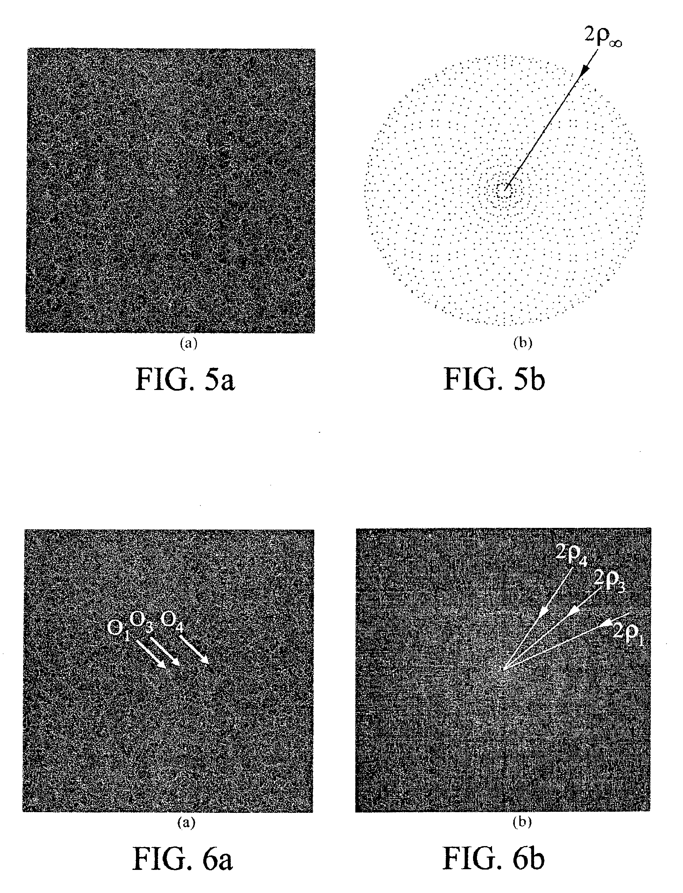

La figure 5a correspond encore à la figure 3a pour un autre exemple de motif élémentaire de la transmittance **t(x, y),** lorsque le composant 1 est encore un réseau périodique à pavage carré. La figure 5b montre les positions des pics de la transformée de Fourier (FT) de la fonction qui est constituée par le carré du module de la transmittance **t(x, y)** : FT | t(x, **y)**|²**(**σ**ₓ,** σ**_{y})** dans le plan des fréquences spatiales σₓ (direction horizontale dans la figure 5b) et σ_{y} (direction verticale dans la figure 5b) : il s'agit du spectre de référence pour le composant 1 dont la transmittance **t(x, y)** a le motif de la figure 5a.

Indépendamment, pour l'onde incidente sphérique 9 qui est issue de l'objet O₁ situé à la distance finie **d₁** sur l'axe Z, l'intensité 10 (figure 2) qui se propage en aval du composant 1 est continûment homothétique à elle-même selon l'axe **Z**, entre le composant 1 et le capteur 101. La répartition d'intensité qui est ainsi produite dans le plan du capteur 101, c'est-à-dire à la distance fixe **d_{f}** du composant 1 en aval de celui-ci et dans un plan qui est perpendiculaire à l'axe **Z**, est appelée image dilatée. Cette image dilatée résulte d'une homothétie 11 qui est appliquée à l'image de référence avec un rapport d'homothétie **H₁** égal à 1 + **d_{f}/d₁.** La décomposition 12 de l'image dilatée en fréquences spatiales, par transformation de Fourier pour les deux coordonnées **x** et **y,** produit un ensemble de pics qui sont situés en un ensemble de couples de valeurs pour les fréquences spatiales σ**ₓ** et σ**_{y}** appelé spectre dilaté **S_{dil}**. Ce spectre dilaté **S_{dil}** est constitué de **N'** pics qui présentent la même répartition relative dans le plan des fréquences spatiales que les **N'** pics du spectre de référence **S_{ref}.** Les pics du spectre dilaté sont situés à l'intérieur d'un cercle de rayon **f_{c}'**=2ρ_{∞}/**H** (propriété 13 de la figure 2).

Lorsque **n** objets distincts 14, n étant un nombre entier supérieur à l'unité, par exemple les trois objets O₁, O₃ et O₄, émettent simultanément de la lumière à travers le composant 1 jusqu'au capteur 101, l'image totale **Iₜₒₜ** dans le plan du capteur est la somme 15 des images **Iᵢ** qui sont produites respectivement par tous les objets i, i étant égal à 1, 3 ou 4 dans l'exemple représenté. Or la transformation de Fourier est une opération mathématique 16 qui est linéaire. Par conséquent, le spectre total **Sₜₒₜ** de l'image totale **Iₜₒₜ** produite ensemble par les **n** objets est la somme 17 de spectres **Sᵢ** qui seraient produits respectivement et séparément à tous les objets i. Autrement dit, chaque spectre **Sᵢ** est une composante du spectre total **Sₜₒₜ**.

Etant donné que :
7 : la transformée de Fourier **T**(σ**ₓ**, σ**_{y}**) de la transmittance **t(x, y)** est constituée d'un nombre fini **N** de pics qui sont répartis sur le cercle de base de rayon ρ_{∞} ;
8 : le spectre de référence **S_{ref}** est constitué d'un ensemble de **N'** pics inscrits dans le cercle de référence de rayon **2**ρ_{∞} ; et
18 : les spectres **Sᵢ** sont discrets et inscrits dans des cercles respectifs de rayons **f_{ci}'** différents,
les spectres **Sᵢ** qui sont produits séparément par tous les objets i situés sur l'axe **Z** sont séparés dans le plan des fréquences spatiales σ**ₓ** et σ**_{y}**.

Alors l'invention propose un algorithme 19 pour détecter les **n** objets et déterminer leurs distances d'éloignement respectives **dᵢ.** A partir de la mesure du rayon **f_{ci}'** qui est associé individuellement à chaque objet i dans le plan des fréquences spatiales σ**ₓ** et σ**_{y}**, et le rayon **f_{c}** étant connu a priori, le rapport de l'homothétie **Hᵢ** est égal au quotient **f_{c}/f_{ci}'** pour l'objet i considéré. Enfin (étape 20 de la figure 2), la distance d'éloignement de chaque objet i est obtenue individuellement par la relation **dᵢ=d_{f}/(Hᵢ-1).**

Ainsi (étape 21 de la figure 2), le procédé de l'invention permet de détecter plusieurs objets qui sont situés à des distances différentes dans le champ d'observation, à partir d'une seule acquisition d'image. Il permet ensuite de séparer distinctement dans le plan des fréquences spatiales les contributions à l'image totale qui sont produites respectivement par les différents objets, puis de calculer la distance d'éloignement de chaque objet. Le problème technique de fournir un dispositif d'imagerie télémétrique, dépourvu d'élément mobile, est donc résolu.

La figure 6a montre une image totale **Iₜₒₜ** qui est saisie par le capteur 101 pour trois objets qui sont situés simultanément à proximité de l'axe **Z,** lorsque le composant 1 correspond aux figures 5a et 5b. Les trois objets sont par exemple O₁, O₃ et O₄ de la figure 1. Les flèches blanches indiquent les positions de ces trois objets, dont O₁ est sur l'axe **Z,** et O₃ et O₄ sont décalés par rapport à l'axe **Z** (décalage nul au centre de la figure). La figure 6b montre la transformée de Fourier de l'image totale **Iₜₒₜ** de la figure 6a, par rapport aux deux coordonnées **x** et **y.** Elle est constituée de trois ensembles de pics qui sont inscrits dans des cercles de rayons distincts **2**_{ρi}, avec l'indice i égal à 1, 3 ou 4 qui identifie les cercles, correspondant respectivement aux trois objets O₁, O₃ et O₄. Plus le rayon **2**ρᵢ du cercle est grand dans le plan des fréquences spatiales σₓ et σ_{y}, plus l'objet i correspondant est éloigné du composant 1.

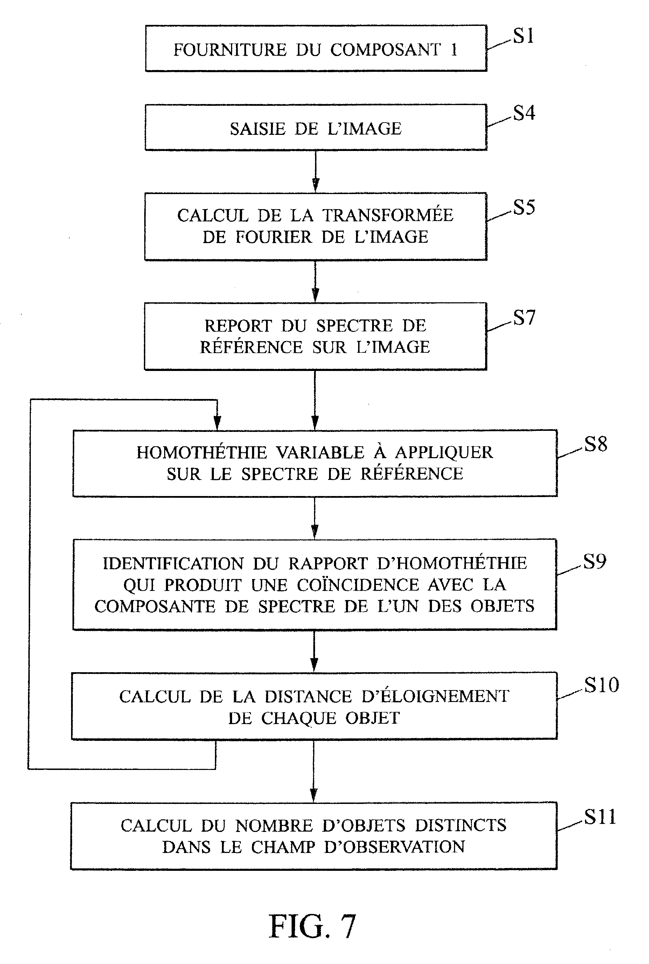

En référence au diagramme de la figure 7 et aux figures 5a, 5b, 6a et 6b, l'utilisation du dispositif d'imagerie télémétrique de la figure 1 comprend les étapes suivantes :
Etape S1 : insertion du composant 1 qui possède la fonction de transmittance **t(x, y)** conforme à la figure 5a, dans le dispositif de la figure 1 ;
Etape S4 : saisie de l'image de la figure 6a, appelée image totale **Iₜₒₜ ;**
Etape S5 : calcul de la transformée de Fourier de l'image de la figure 6a, produisant le spectre total **Sₜₒₜ** de la figure 6b ;
Etape S7 : superposition du spectre de référence **S_{ref}** de la figure 5b sur le spectre total **Sₜₒₜ** de la figure 6b, en utilisant le même point central de coordonnées σ**ₓ**=0 et σ**_{y}**=0 pour les deux spectres ;
Etape S8 : dans la superposition, varier homothétiquement le spectre de référence **S_{ref}** à l'intérieur du plan des fréquences spatiales σₓ et σ_{y}, de sorte que son rayon de cercle circonscrit devienne égal au rayon **2**ρᵢ du cercle circonscrit de l'un des spectres **Sᵢ** qui composent le spectre total **Sₜₒₜ ;**
Etape S9: identifier le rapport d'homothétie **Hᵢ** pour lequel la transformation du rayon initial **2**ρ_{∞} du cercle circonscrit au spectre de référence **S_{ref}** devient égal au rayon **2**_{ρi} du cercle circonscrit au spectre **Sᵢ ;** puis
Etape S10 : à partir de la valeur du rapport d'homothétie **Hᵢ,** calculer la distance d'éloignement **dᵢ** de l'objet i qui a produit le spectre **Sᵢ.**

Recommencer les étapes S8 à S10 pour chaque spectre **Sᵢ** qui peut être distingué avec un rayon distinct dans le spectre total **Sₜₒₜ.**

Enfin, à l'étape suivante S11 qui est optionnelle, le nombre de répétitions de la séquence des étapes S8 à S10 correspond au nombre d'objets ponctuels distincts qui sont présents dans le champ d'observation 100 et qui envoient de la lumière à travers le composant 1 jusqu'au capteur 101.

Un objet qui est contenu dans le champ d'observation 100 peut avoir une extension non-nulle parallèlement à l'axe optique **Z.** Dans ce cas, la séquence des étapes S8 à S10 peut être répétée pour des valeurs quelconques du rapport d'homothétie **H** qui appartiennent à un intervalle continu entre deux valeurs limites. La longueur de cet intervalle fournit la longueur de l'objet selon l'axe **Z** par l'intermédiaire de la formule **d=d_{f}/(H-1),** où **d** est la distance d'éloignement d'un point courant de l'objet par rapport au composant 1.

## Revendications

1. Procédé d'imagerie télémétrique, pour déterminer des distances d'éloignement respectives de plusieurs objets (O₁-O₄) contenus dans un champ d'observation (100), à partir d'une seule image saisie, le procédé comprenant les étapes suivantes :
/1/ obtenir un composant optique plan (1) ayant une transmittance **t**, ladite transmittance variant en fonction de deux coordonnées (x, y) dans un plan du composant, et ayant une transformée de Fourier bidimensionnelle **T** constituée de pics situés sur un cercle de base de rayon ρ_{∞} ;
/2/ disposer le composant perpendiculairement à un axe optique **Z** orienté vers le champ d'observation ;
/3/ disposer un capteur d'image (101) dans un plan perpendiculaire à l'axe **Z**, à une distance **d_{f}** du composant et d'un côté dudit composant opposé au champ d'observation ;
/4/ à l'aide du capteur, saisir une image formée par une lumière provenant des objets à travers le composant ; et
/5/ calculer une transformée de Fourier de l'image saisie, pour obtenir un spectre **Sₜₒₜ** de fréquences spatiales correspondant à des pics de la transformée de Fourier de l'image saisie, ledit spectre pour l'image saisie comprenant plusieurs composantes concentriques chacune inscrite dans un cercle respectif ;
le procédé étant **caractérisé en ce que**
à l'étape /1/, la transformée de Fourier **T** de la transmittance **t** est constituée d'un nombre fini **N** de pics répartis sur le cercle de base ;
et le procédé comprend les étapes supplémentaires suivantes, effectuées après l'étape /5/ :
/6/ fournir un spectre de référence **S_{ref},** correspondant à des pics d'une transformée de Fourier d'une image de référence telle que produite par une source lumineuse ponctuelle située à distance infinie sur l'axe **Z,** à travers le composant sur le capteur, ledit spectre de référence **S_{ref}** étant constitué de fréquences spatiales de référence et inscrit dans un cercle de référence de rayon **2**ρ_{∞}, égal au double du rayon du cercle de base ;
/7/ superposer concentriquement dans un repère commun le spectre de fréquences spatiales de l'image saisie **Sₜₒₜ** et le spectre de référence **S_{ref} ;**
/8/ transformer numériquement par une homothétie centrée dans le repère commun, le spectre de référence **S_{ref}** inscrit dans le cercle de référence de rayon **2**ρ_{∞}, en un spectre de référence transformé **Sᵢ** inscrit dans un cercle de rayon variable **2**ρᵢ, en variant un rapport **Hᵢ** de ladite homothétie égal à **2**ρᵢ/**2**ρ_{∞} ;
/9/ mémoriser le rapport **Hᵢ** de l'homothétie, lorsque tous les pics du spectre de référence transformé **Sᵢ** se superposent avec des pics du spectre de l'image saisie **Sₜₒₜ,** le spectre de référence transformé **Sᵢ** coïncidant alors avec l'une des composantes du spectre de l'image saisie **Sₜₒₜ ;** et
/10/ calculer la distance d'éloignement à laquelle se trouve l'un des objets dans le champ d'observation, selon la formule **dᵢ** = **di(Hᵢ-1) ;** puis
recommencer la séquence des étapes /8/ à /10/ jusqu'à ne plus pouvoir réaliser l'étape /9/ avec une nouvelle valeur du rapport d'homothétie **Hᵢ,** chaque distance d'éloignement obtenue à l'une des exécutions de l'étape /10/ correspondant à l'un des objets contenus dans le champ d'observation.

2. Procédé selon la revendication 1, suivant lequel les itérations de la séquence des étapes /8/ à /10/ sont décomptées, et le nombre **n** des objets contenus dans le champ d'observation est déterminé comme étant égal au nombre des dites itérations.

3. Procédé selon la revendication 1, suivant lequel le composant (1) est un réseau périodique continûment auto-imageant.

4. Dispositif d'imagerie télémétrique, comprenant :
- un composant optique plan (1) ayant une transmittance **t,** ladite transmittance variant en fonction de deux coordonnées (x, y) dans un plan du composant, et ayant une transformée de Fourier bidimensionnelle **T** constituée de pics situés sur un cercle de base de rayon ρ_{∞} ;
- un capteur d'image (101), disposé parallèlement à et à une distance **d_{f}** du composant, d'un côté dudit composant opposé à un champ d'observation (100), avec un axe optique **Z** perpendiculaire au composant et au capteur ;
- une unité de mémorisation (102) adaptée pour mémoriser une image saisie par le capteur, et pour mémoriser un spectre de référence **S_{ref}** correspondant à des pics d'une transformée de Fourier d'une image de référence telle que produite par une source lumineuse ponctuelle située à distance infinie sur l'axe **Z,** ledit spectre de référence **S_{ref}** étant constitué de fréquences spatiales de référence et inscrit dans un cercle de référence de rayon **2**_{ρ∞}, égal au double du rayon du cercle de base ; et
- une unité de calcul (103) adaptée pour exécuter les étapes /7/ à /10/ d'un procédé conforme à la revendication 1, en répétant la séquence des étapes /8/ à /10/ tant qu'une nouvelle valeur du rapport d'homothétie **Hᵢ** est obtenue à l'étape /9/ ;
dans lequel le composant est adapté pour que la transformée de Fourier **T** de la transmittance **t** dudit composant soit constituée d'un nombre fini **N** de pics répartis sur le cercle de base.

5. Dispositif selon la revendication 4, dans lequel le composant (1) est un réseau périodique continûment auto-imageant.

6. Dispositif selon la revendication 5, dans lequel le composant (1) est un réseau de phase.

## Patentansprüche

1. Telemetrisches Bildgebungsverfahren zum Ermitteln von jeweiligen Entfemungsabständen von mehreren in einem Beobachtungsfeld (100) vorhandenen Objekten (O₁-O₄) ausgehend von einem einzigen erfassten Bild, wobei das Verfahren die folgenden Schritte aufweist:
/1/ Bereitstellen eines ebenen optischen Bauteils (1), das eine Transmittanz t hat, die in Abhängigkeit von zwei Koordinaten (x, y) in einer Ebene des Bauteils variiert, und das eine zweidimensionale Fourier-Transformatierte T hat, die aus Peaks (Spitzenwerten) besteht, die auf einem Basiskreis eines Radius ρ_{∞} angeordnet sind;
/2/ Anordnen des Bauteils senkrecht zu einer optischen Achse Z, die zum Beobachtungsfeld hin gerichtet ist;
/3/ Anordnen eines Bildsensors (101) in einer zur Achse Z senkrechten Ebene in einem Abstand d_{f} von dem Bauteil und auf der bezüglich des Beobachtungsfelds anderen Seite des Bauteils;
/4/ Erfassen eines Bilds mit Hilfe des Bildsensors, das durch Licht gebildet wird, das durch das Bauteil hindurch von den Objekten herkommt; und
/5/ Berechnen einer Fourier-Transformatierten des erfassten Bilds, um ein Spektrum Sₜₒₜ von Raumfrequenzen zu gewinnen, die Peaks der Fourier-Transformatierten des erfassten Bilds entsprechen, wobei das Spektrum für das erfasste Bild mehrere konzentrische Komponenten aufweist, die jeweils in einen jeweiligen Kreis einbeschrieben sind;
wobei das Verfahren **dadurch gekennzeichnet, dass**
im Schritt /1/ die Fourier-Transformierte T der Transmittanz t aus einer endlichen Anzahl N von Peaks besteht, die auf dem Basiskreis verteilt sind;
und das Verfahren die folgenden zusätzlichen Schritte aufweist, die nach dem Schritt /5/ durchgeführt werden:
/6/ Bereitstellen eines Referenzspektrums S_{ref}, das Peaks einer Fourier-Transformierten eines Referenzbilds entspricht, wie es von einer im unendlichen Abstand auf der Achse Z angeordneten Punktlichtquelle durch das Bauteil hindurch an dem Sensor erzeugt wird, wobei das Referenzspektrum S_{ref} aus Referenzraumfrequenzen besteht und in einen Referenzkreis eines Radius 2ρ_{∞} einbeschrieben ist, der gleich dem doppelten Radius des Basiskreises ist;
/7/ konzentrisches Übereinanderlegen des Raumfrequenzspektrums des erfassten Bilds Sₜₒₜ und des Referenzspektrums S_{ref} in einem gemeinsamen Bezugssystem;
/8/ numerisches Transformieren des in den Referenzkreis eines Radius 2ρ_{∞} einbeschriebenen Referenzspektrums in ein in einen Kreis eines variablen Radius 2ρᵢ einbeschriebenes transformiertes Referenzspektrum Sᵢ mittels einer in dem gemeinsamen Bezugssystem zentrierten Homothetie durch Variieren eines Verhältnisses Hᵢ der Homothetie gleich 2ρᵢ/2ρ_{∞};
/9/ Speichern des Verhältnisses Hᵢ der Homothetie, wenn alle Peaks des transformierten Referenzspektrums Sᵢ sich mit den Peaks des Spektrums des erfassten Bilds Sₜₒₜ überdecken, also das transformierte Referenzspektrums Sᵢ koinzident ist mit einer der Komponenten des Spektrums des erfassten Bilds Sₜₒₜ; und
/10/ Berechnen des Entfernungsabstands, in welchem sich eines der Objekte in dem Beobachtungsfeld befindet, gemäß der Gleichung dᵢ=d/(Hᵢ-1); dann
erneutes Beginnen der Folge der Schritte /8/ bis /10/, bis der Schritt /9/ nicht mehr mit einem neuen Wert des Homothetie-Verhältnisses Hᵢ durchgeführt werden kann, wobei jeder Entfernungsabstand, der in einer der Ausführungen des Schritts /10/ gewonnen wurde, einem der in dem Beobachtungsfeld vorhandenen Objekte entspricht.

2. Verfahren nach Anspruch 1, gemäß welchem die Iterationen der Folge der Schritte /8/ bis /10/ gezählt werden und die Anzahl n der in dem Beobachtungsfeld enthaltenen Objekte als gleich der Anzahl der Iterationen ermittelt wird.

3. Verfahren nach Anspruch 1, gemäß welchem das Bauteil (1) ein kontinuierlich selbstabbildendes periodisches Gitter ist.

4. Telemetrische Bildgebungsvorrichtung mit:
- einem ebenen optischen Bauteil (1), das eine Transmittanz t hat, die in Abhängigkeit von zwei Koordinaten (x,y) in einer Ebene des Bauteils variiert, und das eine zweidimensionale Fourier-Transformatierte T hat, die aus Peaks besteht, die auf einem Basiskreis eines Radius ρ_{∞} angeordnet sind;
- einem Bildsensor (101), der parallel und in einem Abstand d_{f} von dem Bauteil auf der bezüglich eines Beobachtungsfelds (100) anderen Seite des Bauteils angeordnet ist, wobei eine optische Achse Z senkrecht zum Bauteil und zum Sensor ist;
- einer Speichereinheit (102) zum Speichern eines von dem Sensor erfassten Bilds und zum Speichern eines Referenzspektrums S_{ref}, das Peaks einer Fourier-Transformierten eines Referenzbilds entspricht, wie es von einer im unendlichen Abstand auf der Achse Z angeordneten Punktlichtquelle erzeugt wird, wobei das Referenzspektrum S_{ref} aus Referenzraumfrequenzen besteht und in einen Referenzkreis eines Radius 2ρ_{∞} einbeschrieben ist, der gleich dem doppelten Radius des Basiskreises ist; und
- einer Berechnungseinheit (103) zum Ausführen der Schritte /7/ bis /10/ eines Verfahrens nach Anspruch 1, wobei die Folge der Schritte /8/ bis /10/ wiederholt wird, solange im Schritt /9/ ein neuer Wert des Homothetie-Verhältnisses Hᵢ gewonnen wird;
wobei das Bauteil so konfiguriert ist, dass die Fourier-Transformierte T der Transmittanz t aus einer endlichen Anzahl N von Peaks besteht, die auf dem Basiskreis verteilt sind.

5. Vorrichtung nach Anspruch 4, wobei das Bauteil (1) ein kontinuierlich selbstabbildendes periodisches Gitter ist.

6. Vorrichtung nach Anspruch 5, wobei das Bauteil (1) ein Phasengitter ist.

## Claims

1. Method for range imaging, for determining respective distances to multiple objects (O₁-O₄) contained within a field of view (100), based on a single captured image, the method comprising the following steps:
/1/ obtaining a planar optical component (1) having a transmittance **t,** said transmittance varying as a function of two coordinates (x, y) in a plane of the component, and having a two-dimensional Fourier transform **T** consisting of peaks located on a base circle of radius ρ_{∞};
/2/ arranging the component perpendicularly to an optical axis **Z** oriented towards the field of view;
/3/ arranging an image sensor (101) in a plane perpendicular to the axis **Z,** at a distance **d_{f}** from the component and on the side of said component which is opposite the field of view;
/4/ using the sensor to capture an image formed by light originating from the objects through the component; and
/5/ calculating a Fourier transform of the captured image, in order to obtain a spectrum **Sₜₒₜ** of spatial frequencies corresponding to peaks of the Fourier transform of the captured image, said spectrum for the captured image comprising multiple concentric components which are each inscribed in a respective circle;
the method being **characterized by**
in step /1/, the Fourier transform **T** of the transmittance **t** consists of a finite number **N** of peaks distributed on the base circle;
and the method comprises the following additional steps, performed after step /5/:
/6/ providing a reference spectrum **S_{ref},** corresponding to peaks of a Fourier transform of a reference image as produced by a point light source located at infinite distance away on axis **Z,** through the component onto the sensor, said reference spectrum **S_{ref}** consisting of reference spatial frequencies and being inscribed in a reference circle of radius **2**ρ_{∞}, equal to twice the radius of the base circle;
/7/ in a common reference system, concentrically superimposing the spectrum of spatial frequencies of the captured image **Stot** and the reference spectrum **S_{ref};**
/8/ digitally transforming, by a homothety centered in the common reference system, the reference spectrum **S_{ref}** inscribed in the reference circle of radius **2**ρ_{∞}, into a transformed reference spectrum **Sᵢ** inscribed in a circle of variable radius **2**ρᵢ, by varying a ratio **Hᵢ** of said homothety which is equal to **2**ρᵢ/**2**ρ_{∞};
/9/ storing the homothety ratio **Hᵢ,** when all the peaks of the transformed reference spectrum **Sᵢ** are superimposed with peaks of the spectrum of the captured image **Sₜₒₜ,** the transformed reference spectrum **Sᵢ** then coinciding with one of the components of the spectrum of the captured image **Stot;** and
/10/ calculating the distance to one of the objects in the field of view, using the formula **dᵢ** = **d/(Hᵢ-1);** then
repeating the sequence of steps /8/ to /10/ until it is no longer possible to perform step /9/ with a new value for the homothety ratio **Hᵢ,** each distance obtained during one of the executions of step /10/ corresponding to one of the objects contained in the field of view.

2. Method according to claim 1, wherein the iterations of the sequence of steps /8/ to /10/ are counted, and the number **n** of objects contained in the field of view is determined as being equal to the number of said iterations.

3. Method according to claim 1, wherein the component (1) is a periodic continuously self-imaging grating.

4. Device for range imaging, comprising:
- a planar optical component (1) having a transmittance **t**, said transmittance varying as a function of two coordinates (x, y) in a plane of the component, and having a two-dimensional Fourier transform **T** consisting of peaks located on a base circle of radius ρ_{∞};
- an image sensor (101), arranged parallel to and at a distance **d_{f} from** the component, on the side of said component that is opposite the field of view (100), with an optical axis **Z** perpendicular to the component and to the sensor;
- a storage unit (102) adapted for storing an image captured by the sensor, and for storing a reference spectrum **S_{ref}** corresponding to peaks of a Fourier transform of a reference image as produced by a point light source located at infinite distance away on axis **Z,** said reference spectrum **S_{ref}** consisting of reference spatial frequencies and inscribed in a reference circle of radius **2**ρ_{∞}, equal to twice the radius of the base circle; and
- a computation unit (103) adapted for executing steps /7/ to /10/ of a method according to claim 1, repeating the sequence of steps /8/ to /10/ as long as a new value for the homothety ratio **Hᵢ** is obtained in step /9/;
wherein the component is adapted so that the Fourier transform **T** of the transmittance **t** of said component consists of a finite number **N** of peaks distributed on the base circle.

5. Device according to claim 4, wherein the component (1) is a periodic continuously self-imaging grating.

6. Device according to claim 5, wherein the component (1) is a phase grating.
